# FASCICULE DE BREVET EUROPEEN

(11) **EP 3 600 645 B1**
(45) Date de publication et mention de la délivrance du brevet: **14.07.2021**
(21) Numéro de dépôt: 18719056.6
(22) Date de dépôt: 22.03.2018
(51) Int. Cl.: B01J 19/02, C10G 11/18, F27D 1/14

(54) **STRUCTURE D'ANCRAGE POUR UN REVETEMENT ANTI EROSION, NOTAMMENT DE PROTECTION D'UNE PAROI D'UNITE FCC**
VERANKERUNGSSTRUKTUR FÜR EINE EROSIONSSCHUTZBESCHICHTUNG, INSBESONDERE ZUM SCHUTZ EINER WAND EINER FCC-EINHEIT
ANCHORING STRUCTURE FOR AN ANTI-EROSION COATING, IN PARTICULAR FOR PROTECTING A WALL OF AN FCC UNIT

(30) Priorité: 24.03.2017 FR 1752493
(43) Date de publication de la demande: 05.02.2020
(73) Titulaire: Total Raffinage Chimie, 92400 Courbevoie (FR)
(72) Inventeur: LESAGE, Romain, 2000 Antwerpen (BE); SIMON, Hubert, 76620 Le Havre (FR)
(74) Mandataire: Kerneur, Youen
(86) Numéro de dépôt international: PCT/EP2018/057346
(87) Numéro de publication internationale: WO 2018/172478

(56) Documents cités:
- EP-A1- 0 180 553
- WO-A1-2014/009625
- WO-A1-2016/071305
- US-A1- 2015 267 122

## Description

L'invention concerne une structure d'ancrage pour un revêtement anti érosion. Un tel revêtement est plus particulièrement destiné à protéger une paroi interne ou externe d'une enceinte d'unité de craquage catalytique fluide (FCC « Fluid Catalytic Cracking » en anglais).

L'invention est particulièrement adaptée à la protection d'une paroi d'une zone où il y a un risque d'érosion dû à la circulation de catalyseur, telle qu'une paroi de cyclone, de plenum de réacteur, de stripeur, de riser (réacteur ascendant), de downer (réacteur descendant), les parois de standpipes (tubes verticaux ou sensiblement verticaux), les parois de puits de soutirage ou de désengageur, les parois de chambres à orifices, ou toute autre paroi soumise à l'érosion.

Le craquage catalytique en lit fluidisé (FCC) est un procédé chimique, fréquemment utilisé dans les raffineries de pétrole, dont le but est de transformer les coupes lourdes à longues chaînes d'hydrocarbures, par exemple issues de la distillation sous vide du pétrole, en coupes plus légères et plus valorisables. Les parois métalliques des différentes enceintes d'une unité FCC, telles que par exemple un réacteur et un régénérateur, et les parois métalliques des équipements internes situés dans le régénérateur ou le réacteur, en particulier les cyclones, ou les parois mentionnées plus haut, peuvent subir une érosion due à la circulation des particules de catalyseur, et, au niveau du régénérateur, une corrosion importante et rapide par les gaz de combustion. Il est donc nécessaire de les protéger afin d'allonger leur durée de vie.

A cet effet, les parois métalliques sont recouvertes d'un revêtement de protection. De tels revêtements sont généralement constitués d'un matériau composite, par exemple un béton, maintenu par une structure d'ancrage, le plus souvent métallique. Ces structures d'ancrage sont d'abord soudées aux parois métalliques puis les alvéoles sont remplies de matériau composite, la structure d'ancrage assurant l'accrochage de ce dernier. Les structures d'ancrage alvéolaires sont généralement formées de bandes assemblées deux à deux de manière à définir des alvéoles. Des portions de bandes sont ainsi juxtaposées dans des zones d'assemblage de la structure.

On observe au cours du temps une dégradation de ce revêtement qui peut conduire à une chute de morceaux de revêtement à l'intérieur des enceintes ou des équipements internes et nécessiter l'arrêt de l'installation pour le remplacement du revêtement.

Les dégradations observées peuvent avoir plusieurs origines selon les conditions de fonctionnement de l'enceinte concernée.

Le réacteur ou les cyclones et séparateur situés dans le réacteur, ou encore la ligne de transfert des produits sortant du réacteur, sont en contact avec les gaz issus du craquage de la charge. Ces gaz, s'introduisent entre les interstices du revêtement et conduisent à la formation de coke à l'intérieur de ces interstices, et plus particulièrement au niveau de la jonction des bandes de la structure d'ancrage. Cette formation de coke peut entraîner un décollement important du revêtement lors de cycles successifs de refroidissement/réchauffage de l'enceinte résultant d'arrêts/redémarrages (volontaires ou non) de l'unité : les jeux existant entre le matériau composite et sa structure d'ancrage sont en effet comblés par le coke de sorte que ces jeux de retrait ne peuvent plus jouer leur rôle consistant à absorber les différences de dilatation entre la structure d'ancrage et le matériau composite. Il en résulte la formation de lignes de compression, de fissures, de rupture du cordon de soudure, voire un décollement du matériau composite remplissant les alvéoles. Notamment, le gaz pénètre via les fissures et atteint le cordon soudure, ce qui peut conduire à la rupture de celui-ci.

Dans un régénérateur ou dans les équipements internes d'un régénérateur, notamment les cyclones, mais également dans la ligne des fumées à la sortie du régénérateur, ou encore dans les chambres à orifices, les parois métalliques sont en contact avec des particules de catalyseur et avec un gaz contenant entre autres, de l'oxygène, des oxydes de carbone, de soufre et d'azote. Ce gaz pénètre par les interstices du revêtement et provoque des phénomènes de sulfuration, carburation et oxydation, en particulier au niveau des soudures fixant la structure d'ancrage métallique aux parois métalliques, phénomènes qui peuvent se propager à l'ensemble de l'ancrage métallique.

Quelques soient les phénomènes de dégradation observés, corrosion, notamment par sulfuration, carburation, oxydation, ou formation de coke, la demanderesse a constaté que ces phénomènes surviennent essentiellement au niveau de la structure d'ancrage métallique et/ou de sa liaison par soudure aux parois métalliques, et plus particulièrement au niveau des portions de bandes juxtaposées de la structure d'ancrage. En particulier, sans vouloir être lié par une théorie, il semblerait que la diffusion de gaz au niveau de ces jonctions jusqu'à la paroi métallique joue un rôle dans les phénomènes de dégradation observés.

Le document WO2014/009625A1, déposé par la demanderesse, décrit un procédé de réalisation d'un revêtement dans lequel une structure d'ancrage présentant des alvéoles hexagonales est soudée à la paroi au moins aux jonctions entre les portions juxtaposées des bandes formant la structure d'ancrage. En outre, le matériau composite recouvre entièrement l'une des portions juxtaposées de hauteur plus faible. Ceci permet de limiter l'introduction et la progression d'espèces gazeuses entre les portions juxtaposées, et de limiter ainsi une dégradation du revêtement. Cette solution donne de bons résultats, mais la soudure peut s'avérer délicate à réaliser.

Le document WO2016/071305A1, également déposé par la demanderesse, propose de recouvrir la structure d'ancrage de matériau composite jusqu'à hauteur d'une patte prévue sur les portions des bandes entre les portions juxtaposées, de sorte que le bord supérieur des portions juxtaposées soit entièrement recouverte de matériau composite, limitant la diffusion de gaz au niveau des portions juxtaposées de la structure d'ancrage. A l'usage, on observe cependant un décrochage de morceaux du matériau composite.

Le document EP0180553 présente une structure d'ancrage en nid d'abeille constituée de bandes et utilisant des pattes d'assemblage pour lier les bandes entre elles.

Il existe ainsi un besoin pour améliorer la résistance d'un revêtement face aux phénomènes de dégradation, en particulier à la corrosion, notamment par sulfuration, carburation, oxydation, ou formation de coke.

A cet effet, l'objet de l'invention concerne une structure d'ancrage métallique en nid d'abeille, ladite structure d'ancrage étant formée d'une pluralité de bandes assemblées deux à deux de manière à définir une pluralité d'alvéoles, notamment hexagonales, entre deux bandes adjacentes, dans laquelle chaque bande est divisée suivant sa longueur en une pluralité de portions, dont au moins une série de portions d'assemblage planes juxtaposées et assemblées à une série de portions d'assemblage d'une bande adjacente par des moyens de fixation, chaque bande présentant un bord longitudinal inférieur destiné à être appliqué contre une paroi à protéger et un bord longitudinal supérieur opposé au bord longitudinal inférieur.

Selon l'invention, la structure d'ancrage comporte en outre une pluralité de pattes de protection reliant chaque paire de portions d'assemblage juxtaposées, chaque patte de protection étant solidarisée à une portion d'assemblage par une ligne de jonction longitudinale et s'étendant en direction de la portion d'assemblage juxtaposée, au moins jusqu'à celle-ci.

Ainsi, chaque patte de protection s'étend au travers de la zone de jonction séparant deux portions d'assemblage juxtaposées, notamment sur toute la distance pouvant séparer ces portions d'assemblage. Notamment, chaque patte de protection peut être inclinée par rapport aux plans de portions d'assemblage juxtaposées.

Par cet agencement, les pattes de protection forment des barrières susceptibles de gêner la diffusion des espèces corrosives entre les portions juxtaposées assemblées.

La structure d'ancrage selon l'invention peut en outre présenter une ou plusieurs des caractéristiques suivantes :
- une unique patte de protection relie deux portions d'assemblage juxtaposées ou au moins deux pattes de protection relient deux portions d'assemblage juxtaposées. Une seule patte de protection par paire de portions d'assemblage juxtaposées peut faciliter leur réalisation alors que deux pattes de protection ou plus peuvent faciliter la mise en forme de la structure d'ancrage, par exemple par roulage.
- Chaque paire de portions d'assemblage juxtaposées présente une ou plusieurs pattes de protection s'étendant sur au moins 50% de la longueur desdites portions d'assemblage. Ceci permet de réduire la diffusion éventuelle des espèces corrosives entre les portions d'assemblage. Avantageusement, la longueur totale de la ou des pattes de protection peut représenter au moins 60%, voire au moins 70%, plus préférentiellement au moins 80% de la longueur des portions d'assemblage, voire au moins 90% ou 95% de la longueur des portions d'assemblage.
- Chaque patte de protection est formée d'une partie de la portion d'assemblage repliée le long de la ligne de jonction en direction de la portion d'assemblage juxtaposée. Chaque patte de protection peut ainsi être réalisée de manière simple, par découpe, emboutissage ou similaire. Notamment, chaque patte de protection peut être formée d'une partie de la portion d'assemblage s'étendant jusqu'au bord longitudinal supérieur de celle-ci. Le bord longitudinal supérieur de chaque portion d'assemblage portant ladite au moins une patte de protection peut alors s'étendre parallèlement au bord longitudinal inférieur, dans le prolongement de la ligne de jonction de ladite au moins une patte de protection. Ce bord longitudinal supérieur est alors plus proche du bord longitudinal inférieur que le bord longitudinal supérieur des portions de la bande adjacentes à une portion d'assemblage. Ce bord longitudinal supérieur plus proche peut néanmoins se prolonger sur les portions de bande adjacente : le bord longitudinal supérieur de portions de bande adjacentes à une portion d'assemblage portant ladite au moins une patte de protection s'étend alors parallèlement au bord longitudinal inférieur, dans le prolongement de la ligne de jonction à proximité immédiate de ladite portion d'assemblage.
- Chaque patte de protection s'étend jusqu'à la portion d'assemblage juxtaposée et au-delà de celle-ci, cette portion d'assemblage juxtaposée présentant un évidement pour le passage de chaque patte de protection. Un évidement permet ainsi le passage d'une patte de protection au travers de la portion d'assemblage juxtaposée ou au dessus du bord longitudinal supérieur de celle-ci. En particulier, cet évidement peut être situé à distance du bord longitudinal inférieur et s'étendre jusqu'au bord longitudinal supérieur ou jusqu'à une distance prédéterminée dudit bord longitudinal supérieur. Autrement dit, l'évidement peut former une simple découpe sur le bord longitudinal supérieur ou un orifice traversant la bande. Une extrémité de chaque patte de protection opposée à sa ligne de jonction peut par ailleurs être repliée en direction d'une face de la portion d'assemblage juxtaposée opposée à la face située en regard de la portion d'assemblage solidaire de la patte de protection. Les pattes de protection peuvent alors former des moyens de fixation.
- Les pattes de protection constituent les moyens de fixation des portions d'assemblage.
- Les portions d'assemblage présentent des moyens de fixation distincts des pattes de protection. Dans ce cas, les pattes de protection sont alors situées entre les moyens de fixation et le bord longitudinal supérieur d'une portion d'assemblage. Bien que des moyens de fixation distincts soient prévus, les pattes de protection peuvent participer à l'assemblage des bandes.
- Les portions d'assemblage juxtaposées sont assemblées par au moins un cordon de soudure le long de leurs bords perpendiculaires à la direction longitudinale d'une bande. Ceci peut permettre de limiter la diffusion de gaz entre les portions d'assemblage juxtaposées. On peut notamment prévoir un cordon de soudure s'étendant sur toute la hauteur d'une bande, ou un cordon de soudure immédiatement adjacent au bord longitudinal inférieur ou au bord longitudinal supérieur, ou encore deux cordons de soudure dont l'un est immédiatement adjacent au bord longitudinal inférieur et l'autre immédiatement adjacent au bord longitudinal supérieur.

L'invention concerne également un revêtement anti érosion caractérisé en ce qu'il comprend une structure d'ancrage selon l'invention noyée dans un matériau composite, par exemple un béton, le matériau composite remplissant chaque alvéole depuis le bord longitudinal inférieur de chaque bande au moins jusqu'au bord longitudinal supérieur. Avantageusement, le matériau composite s'étend au-delà du bord longitudinal supérieur d'au moins une bande, notamment au niveau des portions d'assemblage, limitant ainsi davantage la pénétration de gaz entre les portions d'assemblage juxtaposées.

L'invention concerne enfin une enceinte d'une unité de craquage catalytique fluide caractérisée en ce qu'elle comprend au moins une paroi interne ou externe recouverte d'au moins un revêtement selon l'invention, le bord longitudinal inférieur de chaque bande de la structure d'ancrage du revêtement étant fixé par soudage sur la paroi interne ou externe de l'enceinte. Cette enceinte peut notamment être une enceinte de cyclone, de régénérateur, de désengageur ou de tout autre équipement interne d'une unité de craquage catalytique fluide devant être protégée.

L'invention est maintenant décrite en référence aux dessins annexés, non limitatifs, dans lesquels :
- la figure 1 est une représentation en perspective d'une structure d'ancrage selon un mode de réalisation de invention ;
- la figure 2 représente une vue de côté de la structure d'ancrage représentée figure 1 ;
- la figure 3 est une vue en coupe du dispositif d'ancrage selon la ligne A-A de la figure 1, le dispositif d'ancrage étant fixé à une paroi et recouvert de matériau composite ;
- La figure 4 est une vue en coupe similaire à celle de la figure 3 représentant une structure d'ancrage selon un autre mode de réalisation ;
- les figures 5a, 6a, 7a sont des représentations en perspective partielle de structures d'ancrage selon d'autres modes de réalisation de l'invention, avant assemblage de bandes adjacentes ;
- les figures 5b et 5c sont des vues en coupe selon les lignes B-B et C-C respectivement de la figure 5a, après assemblage des bandes, fixation à une paroi et avant mise en place du matériau composite ;
- les figures 6b et 7b sont des vues en coupe selon les lignes D-D et E-E respectivement des figures 6a et 7a, après assemblage des bandes, fixation à une paroi et après mise en place du matériau composite,
- la figure 8 est une représentation en perspective d'une structure d'ancrage selon un autre mode de réalisation de invention ;
- la figure 9 représente une vue de côté de la structure d'ancrage représentée figure 8 ;
- la figure 10 est une vue de détail agrandie de la figure 8.

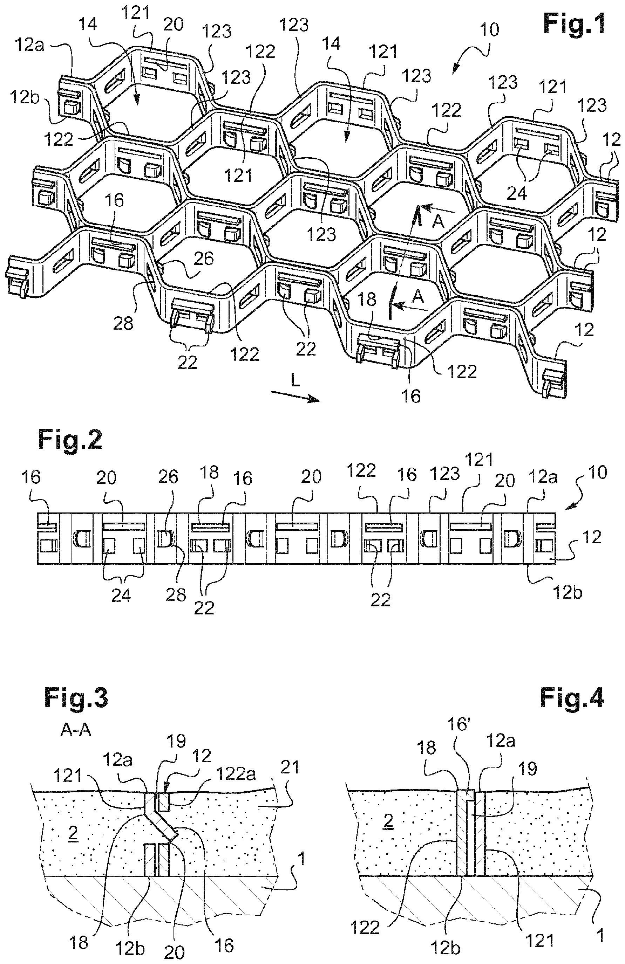

La figure 1 représente une structure d'ancrage 10 métallique du type en nid d'abeille formée d'une pluralité de bandes 12 assemblées deux à deux de manière à former une pluralité d'alvéoles 14. Ces alvéoles 14 sont ici de forme hexagonale et sont reliées par leurs côtés les unes aux autres. Une telle forme hexagonale des alvéoles permet de réaliser une structure d'ancrage particulièrement résistante. En outre, l'assemblage de deux bandes permet l'obtention d'une pluralité d'alvéoles.

Par bande, on entend une bande de matériau métallique présentant une largeur inférieure à une longueur et une épaisseur inférieure à la largeur. Dans la présente description, la longueur d'un élément est définie suivant la direction longitudinale d'une bande.

A titre d'exemple, les dimensions internes des alvéoles peuvent varier de 4 à 8 cm de côté pour une épaisseur (hauteur) d'environ 1,5 à 3,0 cm, par exemple de 2 cm.

Chaque bande 12 est divisée suivant sa longueur en une pluralité de portions, dont au moins une série de portions d'assemblage planes 121, 122 juxtaposées et assemblées à une série de portions d'assemblage 122, 121 d'une bande adjacente par des moyens de fixation. Dans ce mode de réalisation, chaque bande 12, réalisée d'une pièce, est divisée suivant sa longueur en une pluralité de portions 121, 122, 123 :
- des premières portions 121 de bande qui s'étendent dans un premier plan parallèle à la direction longitudinale L de la bande,
- des deuxièmes portions 122 de bande qui s'étendent dans un deuxième plan parallèle au premier plan et distinct de celui-ci,
- des troisièmes portions 123 de bande qui relient chacune une première portion 121 de bande à une deuxième portion 122 de bande.

Les portions 121, 122, 123 d'une bande sont donc planes. Chaque bande peut être réalisée par pliage d'une bande plane le long d'une ligne perpendiculaire à sa direction longitudinale (L), dans le plan de la bande. Les différentes portions 121, 122 et 123 sont ainsi séparées par des pliures, perpendiculaires à la direction longitudinale (L).

Les premières 121 et deuxièmes 122 portions de bande sont ainsi alternées (selon le motif -121-123-122-123- répété sur la longueur d'une bande) sur toute la longueur d'une bande 12 et les premières portions 121 d'une bande sont juxtaposées et assemblées aux deuxièmes portions 122 d'une bande 12 adjacente par des moyens de fixation. Les premières 121 et deuxièmes 122 portions de bande forment des portions d'assemblage à une bande 12 adjacente. Par « portions juxtaposées », on entend ici des portions qui sont disposées parallèlement l'une à l'autre et en regard l'une de l'autre suivant une direction perpendiculaire aux plans des portions juxtaposées.

Actuellement, les différentes spécifications imposent un jeu maximal de l'ordre de 0,2 mm entre deux portions de bandes juxtaposées assemblées. L'invention n'est cependant pas limitée à un jeu particulier.

Avantageusement et de manière non limitative, toutes les bandes 12 de la structure d'ancrage peuvent être identiques, tel que représenté ici. Ceci peut permettre l'obtention d'une structure d'ancrage possédant des propriétés mécaniques particulièrement homogènes sur toute sa surface du fait de l'utilisation de bandes identiques, de sorte que les contraintes engendrées par sa mise en forme seront homogènes et que la structure d'ancrage obtenue présentera une bonne déformabilité. L'utilisation de bandes identiques permet également de réduire les coûts de fabrication.

Chaque bande 12 présente un premier bord longitudinal 12a et un deuxième bord longitudinal 12b parallèle au premier bord longitudinal 12a. De manière générale, chaque bord longitudinal définit au moins un plan avant mise en forme de la structure d'ancrage pour son application sur une paroi à protéger. De préférence, les bords longitudinaux de la bande sont parallèles avant cette mise en forme.

Dans ce mode de réalisation, les premier et deuxième bords longitudinaux s'étendent chacun dans un unique plan avant la mise en forme de la structure d'ancrage. Le deuxième bord longitudinal 12b est ici le bord destiné à être appliqué contre une paroi métallique 1 et fixé à celle-ci, tel que représenté figure 3.

Selon l'invention, la structure d'ancrage 10 comporte en outre une pluralité de pattes de protection 16 reliant des portions d'assemblage juxtaposées 121, 122 de bandes adjacentes. Chaque patte de protection 16 est solidarisée à une portion d'assemblage 122 d'une bande 12 par une ligne de jonction 18 longitudinale et s'étend en direction de la portion d'assemblage juxtaposée 121, au moins jusqu'à celle-ci. En variante, chaque patte de protection pourrait être solidarisée à une portion d'assemblage 121 et s'étendre en direction d'une portion d'assemblage 122, ou encore des pattes de protection pourraient être prévues alternativement sur les portions 121 et 122 d'une même bande.

Dans l'exemple représenté sur les figures 1-3, chaque patte de protection 16 s'étend jusqu'à la portion d'assemblage juxtaposée 121 et au-delà de celle-ci (voir figure 3). Chaque patte de protection 16 traverse alors un orifice 20 de forme sensiblement correspondante ménagé dans la portion d'assemblage 121 de la bande adjacente (voir figure 3). Les pattes de protection 16 sont en outre inclinées en direction du bord longitudinal inférieur 12b. Les pattes de protection 16 sont ici formées par découpe de la portion d'assemblage 122 dont elles sont issues, et sont donc pliées par rapport à cette portion d'assemblage 122 le long de la ligne de jonction 18. Chaque patte de protection 16 est ainsi inclinée par rapport aux plans des portions d'assemblage 121, 122 (voir figure 3). Notamment, chaque patte de protection 16 définit un plan sécant des plans des portions d'assemblage 121, 122.

Les pattes de fixation 16 s'étendent ainsi au travers de l'espace 19 séparant deux portions d'assemblage juxtaposées 121, 122 (fig. 3), limitant ainsi la diffusion d'espèces chimique depuis le bord longitudinal supérieur 12a des bandes 12 entre les portions 121, 122.

L'invention n'est toutefois pas limitée à cette réalisation particulière.

Tel que représenté sur la figure 4, une patte de protection 16' pourrait s'étendre du côté du bord longitudinal supérieur 12a jusqu'à la portion d'assemblage 121 juxtaposée et être en butée contre celle-ci, fermant ainsi l'espace 19 séparant les portions d'assemblage 121, 122 du côté opposé au bord longitudinal inférieur 12b. La patte de protection 16' forme alors sensiblement un angle droit avec les plans des portions d'assemblage 121, 122.

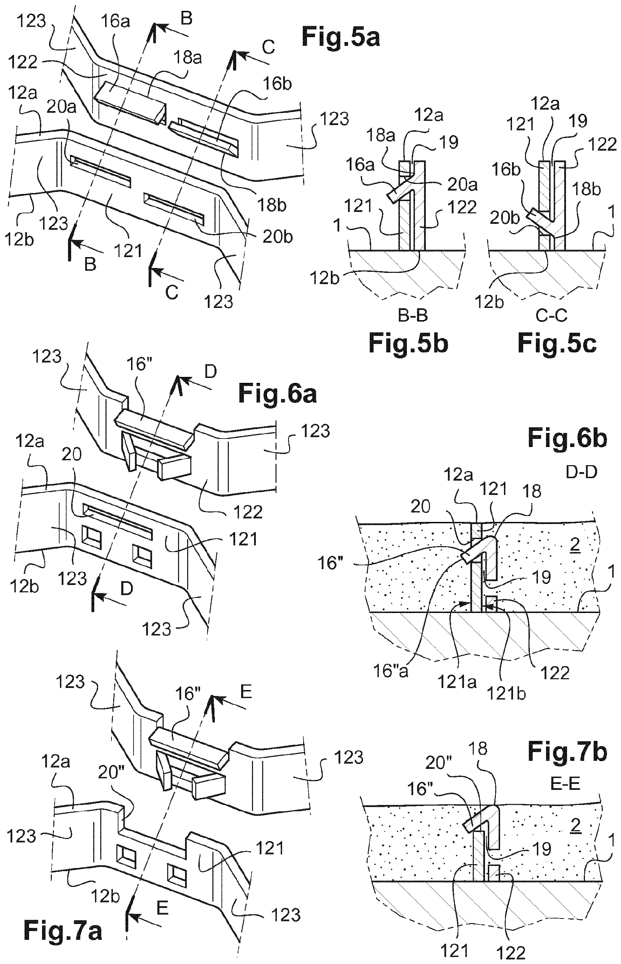

Dans le mode de réalisation représenté sur les figures 5a, 5b, 5c, deux pattes de protection 16a, 16b sont prévues sur une même portion d'assemblage 122, reliées chacune à la portion d'assemblage 122 par une ligne de jonction longitudinale 18a, 18b respectivement. Comme dans le mode de réalisation représenté sur les figures 1-3, chaque patte de protection 16a, 16b est formée d'une partie de la portion d'assemblage 122 repliée le long de la ligne de jonction 18a, 18b respectivement, en direction de la portion d'assemblage juxtaposée 121. Elles peuvent par exemple être formées par découpe ou emboutissage. On notera que l'une des pattes de fixation 16a est inclinée en direction du bord longitudinal supérieur 12a (voir figure 5b) alors que l'autre patte de fixation 16b est inclinée en direction du bord longitudinal inférieur 12b. Chacune des pattes de fixation 16a, 16b est insérée dans un orifice correspondant 20a, 20b respectivement, ménagé dans la portion d'assemblage 121 juxtaposée. Dans ce mode de réalisation, les pattes de protection 16a, 16b assurent également l'assemblage des portions d'assemblage 121, 122, leur orientation opposée favorisant cet assemblage. On notera que les pattes de protection 16a, 16b sont de mêmes dimensions et situées l'une à côté de l'autre, les lignes de jonction respectives 18a, 18b étant décalées perpendiculairement à la direction L, ainsi que les orifices 20a, 20b.

Dans le mode de réalisation représenté sur les figures 6a, 6b, une patte de protection 16" d'une portion d'assemblage 122 est également formée d'une partie de la portion d'assemblage repliée le long de la ligne de jonction 18 en direction de la portion d'assemblage juxtaposée 121, mais cette partie s'étend jusqu'au bord longitudinal supérieur 12a. La patte de protection 16" repliée traverse alors l'orifice correspondant 20 de la portion d'assemblage adjacente.

Dans le mode de réalisation représenté sur les figures 7a, 7b, une patte de protection 16" identique à celle représentée sur les figures 6a, 6b est réalisée. Au lieu de traverser un orifice 20 de la portion d'assemblage adjacente 121, elle passe au dessus d'un évidement 20" (voir figure 7b), qui est situé à distance du bord longitudinal inférieur 12b et s'étend jusqu'au bord longitudinal supérieur 12a de la bande.

On notera que le matériau composite 2 recouvre entièrement la portion d'assemblage 122 comportant la patte de protection 16" dans les modes de réalisation des figures 6b et 7b.

Dans les modes de réalisation représentés sur les figures 1-3, 6a, 6b et 7a, 7b, des moyens de fixation distincts des pattes de protection sont prévus pour assembler les paires de portions d'assemblage 121, 122 juxtaposées. Les pattes de protection 16, 16" sont alors agencées entre les moyens de fixation et le bord longitudinal supérieur 12a des bandes, tel que visible sur ces figures. Les pattes de protection sont ainsi plus proches du bord longitudinal supérieur 12a que du bord longitudinal inférieur 12b.

Bien qu'elles soient distinctes des moyens de fixation, les pattes de protection 16, 16" peuvent néanmoins participer à la fixation des portions d'assemblage. A cet effet, tel que représenté sur la figure 6b, une extrémité 16"a de la patte de protection 16 opposée à sa ligne de jonction 18 (formant le bord longitudinal supérieur 12a avant pliage de la patte de fixation 16") est repliée en direction d'une face 121a de la portion d'assemblage juxtaposée 121 opposée à la face 121b située en regard de la portion d'assemblage 122 solidaire de la patte de protection 16". Il peut alors être avantageux que la surface des pattes de protection 16, 16" soit supérieure à la surface de l'orifice 20.

Les moyens de fixation des portions d'assemblage 121, 122 visibles sur les figures 1-3, 6a, 6b et 7a, 7b sont maintenant décrits en référence aux figures 1 et 2.

Dans l'exemple représenté, les moyens de fixation des bandes 12 comprennent deux languettes 22 par deuxième portion 122 formées par découpe dans ces deuxièmes portions 122. Ces languettes 22 sont reliées à la deuxième portion 122 par une ligne de jonction perpendiculaire aux bords longitudinaux supérieur 12a et inférieur 12b. Elles sont ici orientées l'une vers l'autre (voir figure 1). Ces languettes 22 sont reçues dans des orifices 24 correspondants des premières portions 121. La fixation des bandes 12 est ainsi réalisée très simplement en introduisant les languettes 22 des deuxièmes portions 122 dans les orifices 24 correspondants des premières portions 121, puis en repliant les languettes 22 contre ces premières portions 121 sur leur face opposée à la face juxtaposée à la deuxième portion 122 (voir figure 1).

En variante, une seule languette 22 pourrait être prévue par deuxième portion 122. Les languettes 22 et les orifices 24 peuvent être disposés indifféremment sur les premières ou deuxièmes portions de bande 121, 122. Toutefois, afin de simplifier la réalisation des bandes, les languettes 22 sont ici prévues sur les mêmes portions d'assemblage 122 que les pattes de protection 16, les orifices 24 étant réalisés sur les portions d'assemblage 121 comportant les orifices 20 ou les évidements 20" de réception des pattes de protection 16, 16".

D'autres moyens de fixation pourraient être envisagés, tels que des agrafes ou rivets traversant des orifices correspondants des premières et deuxièmes portions.

Tel que représenté sur la figure 1, chaque bande 12 peut en outre présenter des languettes de matière 26 découpées dans au moins une portion autre qu'une portion d'assemblage (soit ici une portion 123) et pliée afin de saillir de cette portion suivant une ligne de pliure perpendiculaire à la direction longitudinale de la bande. Une telle configuration peut permettre d'améliorer l'ancrage du matériau composite sur l'élément d'ancrage, la languette 26 étant alors noyée dans le matériau composite, dont le maintien est également renforcé du fait qu'il traverse l'orifice de découpe 28 libéré par la languette 26 repliée.

Les languettes 26 de matière issues de portions faisant partie d'une même alvéole peuvent être repliées l'une vers l'autre. Cet agencement permet d'obtenir deux languettes repliées vers le centre de chaque alvéole lorsque les bandes sont assemblées les unes aux autres.

Ces languettes 26 peuvent également être repliées de manière à s'étendre sensiblement parallèlement aux plans des portions d'assemblage 121, 122 des bandes.

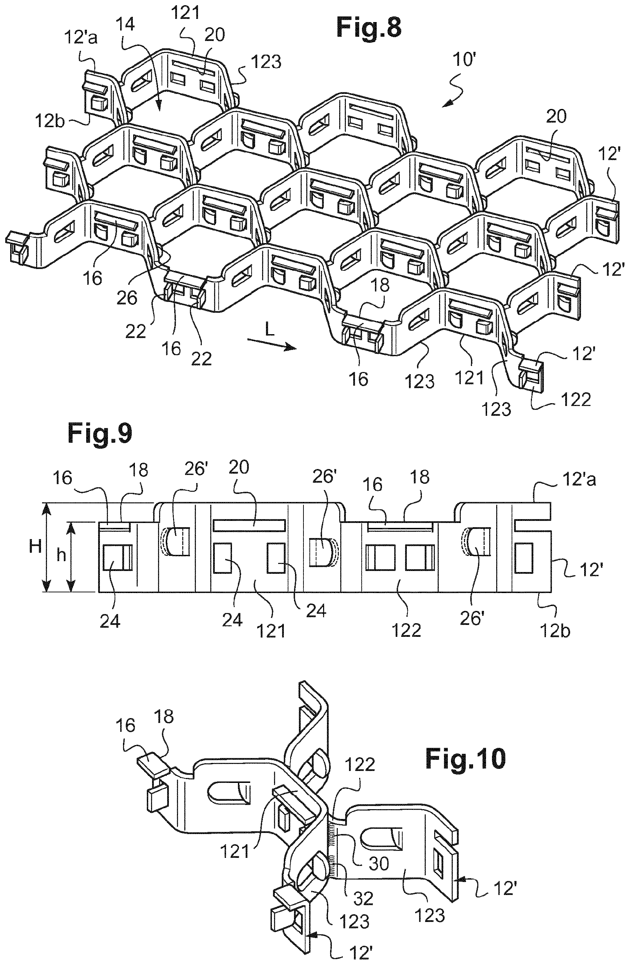

Les figures 8-10 représentent une structure d'ancrage 10' dont la forme de diffère du mode de réalisation représenté sur les figures 1-3 que par la forme des bords longitudinaux supérieurs 12'a des bandes 12' et la position des languettes 26'. Ces languettes 26 sont agencées à des distances différentes du bord longitudinal inférieur 12b d'une portion 123 à une autre (voir figure 9). Les autres éléments représentés fig. 8-10 sont identiques à ceux décrits en référence aux figures 1-3 et sont désignés par les mêmes références numériques.

Dans ce mode de réalisation, le bord longitudinal supérieur 12'a de chaque portion d'assemblage 122 portant la patte de protection 16 s'étend parallèlement au bord longitudinal inférieur 12b, dans le prolongement de la ligne de jonction 18 de la patte de protection 16. Ainsi, au niveau de la portion d'assemblage 122, le bord longitudinal supérieur 12'a s'étend à une distance h du bord longitudinal inférieur 12b inférieure à la distance H séparant le bord longitudinal supérieur 12'a des portions de bande adjacentes 123 (voir fig.9). Autrement dit, le bord longitudinal supérieur 12'a d'une même bande ne s'étend pas dans un seul et unique plan avant mise en forme de la structure d'ancrage. Dans le mode de réalisation représenté, le bord longitudinal supérieur 12'a s'étend à la distance h du bord longitudinal inférieur 12b sur toute la longueur de la portion d'assemblage 122 ainsi que sur une partie de la longueur des portions de bande adjacentes 123. Ainsi, sur cette longueur de bande, le matériau composite 2 peut recouvrir entièrement le bord longitudinal supérieur 12'a de hauteur h, créant une barrière supplémentaire à la diffusion de gaz entre les portions d'assemblage 121, 122 juxtaposées.

En outre, tel que visible sur la figure 10 des cordons de soudures 30, 32 s'étendant le long des bords des portions d'assemblage juxtaposés 121, 122 perpendiculaires à la direction longitudinale d'une bande 12'. Autrement dit, ces cordons de soudure s'étendent perpendiculairement à la direction longitudinale d'une bande 12' et ferment au moins en partie l'accès à l'espace séparant les portions d'assemblage juxtaposées 121, 122 réduisant davantage les risques de diffusion de gaz entre ces portions. A noter que seul l'un des cordons de soudure 30 ou 32 peut être prévu, ou qu'un unique cordon de soudure s'étendant sur toute la hauteur de jonction des portions d'assemblage peut être prévue. Ces cordons de soudures peuvent bien entendu être également prévus dans le mode de réalisation décrit en référence aux figures 1-3, quelque soit la forme et le nombre de pattes de protection.

La structure d'ancrage 10 représentée figure 1 peut être mise en forme avant sa fixation sur la paroi métallique 1, par exemple par roulage afin d'épouser la forme de cette paroi métallique.

La structure d'ancrage 10 représentée sur la figure 1 peut être mise en œuvre de la façon suivante :
- la structure d'ancrage 10 est d'abord mise en forme ; à cet effet, les deuxièmes bords longitudinaux 12b sont conformés pour être en contact avec la paroi métallique 1,
- on procède ensuite à la fixation de la structure d'ancrage 10 sur la paroi métallique 1 en soudant à celle-ci le bord inférieur 12b des bandes,
- puis, on insère un matériau composite 2 dans les alvéoles 14 de la structure d'ancrage 10 depuis la paroi métallique 1 et au moins jusqu'au premier bord longitudinal 12a de chaque bande, tel que représenté figure 3.

Bien entendu, cette mise en œuvre s'applique également aux autres modes de réalisation de la structure d'ancrage précédemment décrits, dont les modes de réalisation des pattes de protection peuvent être combinés.

Quelque soit sa forme, la structure en nid d'abeille de la présente invention est avantageusement réalisée en acier inoxydable (un acier inoxydable contient au plus 1,2% en poids de carbone et au moins 10,5% en poids de chrome selon la norme EN10008). En particulier, l'acier inoxydable sera choisi de manière à résister à l'environnement de l'enceinte dans laquelle la structure d'ancrage doit être utilisée.

Dans certaines applications, par exemple en revêtement dans des cyclones de régénérateur, il a été observé des dégradations sérieuses de l'acier inoxydable utilisé pour des structures en nid d'abeille.

Il semblerait que sous la couche externe d'oxyde de chrome, la teneur en chrome de l'acier diminue en cours d'utilisation jusqu'à atteindre une valeur inférieure à 10,5% en poids. Or, un acier perd son caractère inoxydable lorsque sa teneur en chrome est inférieure à 10,5% en poids : une oxydation rapide de l'acier peut alors survenir.

En outre, la formation de carbures a également été observée et semble avoir été la cause de microfissures à l'intérieur de l'acier.

Afin d'éviter ou de limiter ce type de dégradation, les bandes de la structure d'ancrage peuvent avantageusement être réalisées en acier inoxydable austénitique choisi parmi les aciers suivants :
- un acier inoxydable contenant de 0,04 à 0,10% en poids de carbone, de 17 à 19% de chrome et de 9 à 12% de nickel, et avec une teneur en niobium comprise de 8 fois la teneur en carbone à 1% en poids, par exemple un acier de grade AISI 347,
- un acier contenant au plus 0,015% en poids de carbone, de 15 à 17% de chrome et de 33 à 37% de nickel, par exemple un acier de grade AISI 330,
- un acier contenant au plus 0,10% en poids de carbone, de 24 à 26% de chrome et de 19 à 22% de nickel, par exemple un acier de grade AISI 310.

Le matériau composite est de préférence un matériau résultant d'un assemblage d'au moins deux matériaux non miscibles possédant une forte capacité d'adhésion. De préférence, le matériau composite est un matériau de construction composite tel qu'un béton, en particulier un béton adapté à une utilisation dans une unité de craquage catalytique fluide.

## Revendications

1. Structure d'ancrage (10, 10') métallique en nid d'abeille, ladite structure d'ancrage (10, 10') étant formée d'une pluralité de bandes (12, 12') assemblées deux à deux de manière à définir une pluralité d'alvéoles (14) entre deux bandes adjacentes, dans laquelle chaque bande (12) est divisée suivant sa longueur en une pluralité de portions, dont au moins une série de portions d'assemblage planes (121, 122) juxtaposées et assemblées à une série de portions d'assemblage d'une bande adjacente par des moyens de fixation, chaque bande (12) présentant un bord longitudinal inférieur (12b) destiné à être appliqué contre une paroi à protéger et un bord longitudinal supérieur (12a, 12'a) opposé au bord longitudinal inférieur,
**caractérisée en ce qu'**elle comporte en outre une pluralité de pattes de protection (16, 16', 16", 16a, 16b) reliant chaque paire de portions d'assemblage juxtaposées (121, 122), chaque patte de protection (16, 16', 16", 16a, 16b) étant solidarisée à une portion d'assemblage (122) par une ligne de jonction (18) longitudinale et chaque patte de protection (16, 16', 16", 16a, 16b) s'étendant en direction de la portion d'assemblage juxtaposée (121), au moins jusqu'à celle-ci.

2. Structure d'ancrage (10, 10') selon la revendication 1, **caractérisée en ce qu'**une unique patte de protection (16, 16', 16") relie deux portions d'assemblage juxtaposées.

3. Structure d'ancrage (10, 10') selon la revendication 1, **caractérisée en ce qu'**au moins deux pattes de protection (16a, 16b) relient deux portions d'assemblage juxtaposées.

4. Structure d'ancrage (10, 10') selon l'une quelconque des revendications 1 à 3, **caractérisée en ce que** chaque paire de portions d'assemblage juxtaposées (121, 122) présente une ou plusieurs pattes de protection s'étendant sur au moins 50% de la longueur desdites portions d'assemblage.

5. Structure d'ancrage (10, 10') selon l'une quelconque des revendications 1 à 4, **caractérisée en ce que** chaque patte de protection (16, 16', 16", 16a, 16b) est formée d'une partie de la portion d'assemblage (122) repliée le long de la ligne de jonction (18) en direction de la portion d'assemblage juxtaposée (121).

6. Structure d'ancrage (10, 10') selon la revendication 5, **caractérisée en ce que** chaque patte de protection (16") est formée d'une partie de la portion d'assemblage s'étendant jusqu'au bord longitudinal supérieur de celle-ci.

7. Structure d'ancrage (10') selon la revendication 6, **caractérisée en ce que** le bord longitudinal supérieur (12'a) de chaque portion d'assemblage (122) portant ladite au moins une patte de protection (16) s'étend parallèlement au bord longitudinal inférieur (12b), dans le prolongement de la ligne de jonction (18) de ladite au moins une patte de protection (16).

8. Structure d'ancrage (10') selon la revendication 7, **caractérisée en ce que** le bord longitudinal supérieur (12'a) de portions de bande adjacentes (123) à une portion d'assemblage (122) portant ladite au moins une patte de protection (16) s'étend parallèlement au bord longitudinal inférieur (12b), dans le prolongement de la ligne de jonction (18) à proximité immédiate de ladite portion d'assemblage (122).

9. Structure d'ancrage (10) selon l'une quelconque des revendications 1 à 8, **caractérisée en ce que** chaque patte de protection (16, 16", 16a, 16b) s'étend jusqu'à la portion d'assemblage juxtaposée (121) et au-delà de celle-ci et **en ce que** cette portion d'assemblage juxtaposée (121) présente un évidement (20, 20, 20a, 20b, 20") pour le passage de chaque patte de protection.

10. Structure d'ancrage (10) selon la revendication 9, **caractérisé en ce que** l'évidement est situé à distance du bord longitudinal inférieur et s'étend jusqu'au bord longitudinal supérieur ou jusqu'à une distance prédéterminée dudit bord longitudinal supérieur.

11. Structure d'ancrage (10) selon l'une quelconque des revendications 9 ou 10, **caractérisée en ce qu'**une extrémité (16"a) de chaque patte de protection (16") opposée à sa ligne de jonction (18) est repliée en direction d'une face (121a) de la portion d'assemblage juxtaposée (121) opposée à la face (121b) située en regard de la portion d'assemblage (122) solidaire de la patte de protection (16"a).

12. Structure d'ancrage (10) selon l'une quelconque des revendications 1 à 11, **caractérisée en ce que** les pattes de protection (16") constituent les moyens de fixation des portions d'assemblage.

13. Structure d'ancrage (10) selon l'une quelconque des revendications 1 à 12, **caractérisée en ce que** les portions d'assemblage présentent des moyens de fixation distincts des pattes de protection , celles-ci étant situées entre les moyens de fixation et le bord longitudinal supérieur d'une portion d'assemblage.

14. Structure d'ancrage (10) selon l'une quelconque des revendications 1 à 13, **caractérisée en ce que** les portions d'assemblage juxtaposées (121, 122) sont assemblées par au moins un cordon de soudure (30, 32) le long de leurs bords perpendiculaires à la direction longitudinale d'une bande.

15. Revêtement anti érosion **caractérisé en ce qu'**il comprend une structure d'ancrage (10) selon l'une quelconque des revendications 1 à 14 noyée dans un matériau composite (2), par exemple un béton, le matériau composite remplissant chaque alvéole (14) depuis le bord longitudinal inférieur (12b) de chaque bande (12) au moins jusqu'au bord longitudinal supérieur (12a).

16. Enceinte d'une unité de craquage catalytique fluide **caractérisée en ce qu'**elle comprend au moins une paroi (1) interne ou externe recouverte d'au moins un revêtement selon la revendication 15, le bord longitudinal inférieur (12b) de chaque bande (12) de la structure d'ancrage (10) du revêtement étant fixé par soudage sur la paroi (1) interne ou externe de l'enceinte.

## Patentansprüche

1. Metallische Wabenverankerungsstruktur (10, 10'), wobei die Verankerungsstruktur (10, 10') aus einer Vielzahl von Streifen (12, 12') gebildet ist, die paarweise derart montiert sind, dass eine Vielzahl von Zellen (14) zwischen zwei benachbarten Streifen definieren ist, wobei jeder Streifen (12) entlang seiner Länge in eine Vielzahl von Abschnitten unterteilt ist, darunter mindestens eine Reihe flacher Montageabschnitte (121, 122), die nebeneinanderliegen und von Befestigungsmitteln an eine Reihe von Montageabschnitten eines angrenzenden Streifens montiert sind, wobei jeder Streifen (12) eine untere Längskante (12b) aufweist, die dazu bestimmt ist, gegen eine Wand, die zu schützen ist, angelegt zu werden, und eine obere Längskante (12a, 12'a), die der unteren Längskante entgegengesetzt ist,
**dadurch gekennzeichnet, dass** sie außerdem eine Vielzahl von Schutzlaschen (16, 16', 16", 16a, 16b) umfasst, die jedes Paar nebeneinanderliegender Montageabschnitte (121, 122) verbinden, wobei jede Schutzlasche (16, 16', 16", 16a, 16b) an einem Montageabschnitt (122) durch eine Längsverbindungslinie (18) fest verbunden ist, und sich jede Schutzlasche (16, 16', 16", 16a, 16b) in Richtung des danebenliegenden Montageabschnitts (121), mindestens bis zu diesem erstreckt.

2. Verankerungsstruktur (10, 10') nach Anspruch 1, **dadurch gekennzeichnet, dass** eine einzige Schutzlasche (16, 16', 16") zwei nebeneinanderliegende Montageabschnitte verbindet.

3. Verankerungsstruktur (10, 10') nach Anspruch 1, **dadurch gekennzeichnet, dass** mindestens zwei Schutzlaschen (16a, 16b) zwei nebeneinanderliegende Montageabschnitte verbinden.

4. Verankerungsstruktur (10, 10') nach einem der Ansprüche 1 bis 3, **dadurch gekennzeichnet, dass** jedes Paar nebeneinanderliegender Montageabschnitte (121, 122) eine oder mehrere Schutzlaschen aufweist, die sich über mindestens 50 % der Länge der Montageabschnitte erstrecken.

5. Verankerungsstruktur (10, 10') nach einem der Ansprüche 1 bis 4, **dadurch gekennzeichnet, dass** jede Schutzlasche (16, 16', 16", 16a, 16b) aus einem Teil des Montageabschnitts (122), der entlang der Verbindungslinie (18) in Richtung des danebenliegenden Montageabschnitts (121) zurückgebogen ist, gebildet ist.

6. Verankerungsstruktur (10, 10') nach Anspruch 5, **dadurch gekennzeichnet, dass** jede Schutzlasche (16") aus einem Teil des Montageabschnitts, der sich bis zu der oberen Längskante dieses erstreckt, gebildet ist.

7. Verankerungsstruktur (10') nach Anspruch 6, **dadurch gekennzeichnet, dass** sich die obere Längskante (12'a) jedes Montageabschnitts (122), der die mindestens eine Schutzlasche (16) trägt, parallel zu der unteren Längskante (12b), in der Verlängerung der Verbindungslinie (18) der mindestens einen Schutzlasche (16) erstreckt.

8. Verankerungsstruktur (10') nach Anspruch 7, **dadurch gekennzeichnet, dass** sich die obere Längskante (12'a) von Streifenabschnitten (123), die an einen Montageabschnitt (122), der die mindestens eine Schutzlasche (16) trägt, an Grenzen, parallel zu der unteren Längskante (12b) in der Verlängerung der Verbindungslinie (18) in unmittelbarer Nähe des Montageabschnitts (122) erstreckt.

9. Verankerungsstruktur (10) nach einem der Ansprüche 1 bis 8, **dadurch gekennzeichnet, dass** sich jede Schutzlasche (16, 16", 16a, 16b) bis zu dem danebenliegenden Montageabschnitt (121) und über diesen hinaus erstreckt, und dass dieser danebenliegende Montageabschnitt (121) eine Aussparung (20, 20, 20a, 20b, 20") für den Durchgang jeder Schutzlasche aufweist.

10. Verankerungsstruktur (10) nach Anspruch 9, **dadurch gekennzeichnet, dass** die Aussparung in einem Abstand von der unteren Längskante liegt und sich bis zu der oberen Längskante oder bis zu einem vorbestimmten Abstand von der oberen Längskante erstreckt.

11. Verankerungsstruktur (10) nach einem der Ansprüche 9 oder 10, **dadurch gekennzeichnet, dass** ein Ende (16"a) jeder Schutzlasche (16") gegenüber ihrer Verbindungslinie (18) in Richtung einer Fläche (121a) des danebenliegenden Montageabschnitts (121) gegenüber der Fläche (121b), die dem Montageabschnitt (122) zugewandt liegt, der fest mit der Schutzlasche (16"a) verbunden ist, zurückgebogen ist.

12. Verankerungsstruktur (10) nach einem der Ansprüche 1 bis 11, **dadurch gekennzeichnet, dass** die Schutzlaschen (16") die Befestigungsmittel der Montageabschnitte bilden.

13. Verankerungsstruktur (10) nach einem der Ansprüche 1 bis 12, **dadurch gekennzeichnet, dass** die Montageabschnitte Befestigungsmittel aufweisen, die von den Schutzlaschen getrennt sind, wobei diese zwischen den Befestigungsmitteln und der oberen Längskante eines Montageabschnitts liegen.

14. Verankerungsstruktur (10) nach einem der Ansprüche 1 bis 13, **dadurch gekennzeichnet, dass** die nebeneinanderliegenden Montageabschnitte (121, 122) durch mindestens eine Schweißnaht (30, 32) entlang ihrer Kanten senkrecht zu der Längsrichtung eines Streifens montiert sind.

15. Erosionsschutzbeschichtung, **dadurch gekennzeichnet, dass** sie eine Verankerungsstruktur (10) nach einem der Ansprüche 1 bis 14 umfasst, die in ein Verbundmaterial (2), beispielsweise Beton, eingebettet ist, wobei das Verbundmaterial jede Zelle (14) von der unteren Längskante (12b) jedes Streifens (12) mindestens bis zu der oberen Längskante (12a) füllt.

16. Einschluss einer katalytischen Fluidcrackanlage, **dadurch gekennzeichnet, dass** er mindestens eine Innen- oder Außenwand (1) umfasst, die mit mindestens einer Beschichtung nach Anspruch 15 beschichtet ist, wobei die untere Längskante (12b) jedes Streifens (12) der Verankerungsstruktur (10) der Beschichtung durch Schweißen auf der Innen- oder Außenwand (1) des Gehäuses befestigt ist.

## Claims

1. A metal honeycomb anchoring structure (10, 10'), said anchoring structure (10, 10') being formed of a plurality of strips (12, 12') assembled in pairs so as to define a plurality of cells (14) between two adjacent strips, wherein each strip (12) is divided along its length into a plurality of portions, including at least one series of planar assembly portions (121, 122) juxtaposed with and joined to a series of assembly portions of an adjacent strip by attachment means, each strip (12) having a lower longitudinal edge (12b) intended for being pressed against a wall to be protected and an upper longitudinal edge (12a, 12'a) opposite the lower longitudinal edge,
**characterised in that** it further comprises a plurality of protective tabs (16, 16', 16", 16a, 16b) connecting each pair of juxtaposed assembly portions (121, 122), each protective tab (16, 16', 16", 16a, 16b) being secured to an assembly portion (122) by a longitudinal junction line (18) and each protective tab (16, 16', 16", 16a, 16b) extending towards the juxtaposed assembly portion (121), at least as far as said portion.

2. The anchoring structure (10, 10') according to claim 1, **characterised in that** a single protective tab (16, 16', 16") connects two juxtaposed assembly portions.

3. The anchoring structure (10, 10') according to claim 1, **characterised in that** at least two protective tabs (16a, 16b) connect two juxtaposed assembly portions.

4. The anchoring structure (10, 10') according to any one of claims 1 to 3, **characterised in that** each pair of juxtaposed assembly portions (121, 122) has one or more protective tabs extending over at least 50% of the length of said assembly portions.

5. The anchoring structure (10, 10') according to any one of claims 1 to 4, **characterised in that** each protective tab (16, 16', 16", 16a, 16b) is formed from part of the assembly portion (122) folded along the junction line (18) towards the juxtaposed assembly portion (121).

6. The anchoring structure (10, 10') according to claim 5, **characterised in that** each protective tab (16") is formed from a part of the assembly portion extending to the upper longitudinal edge thereof.

7. The anchoring structure (10') according to claim 6, **characterised in that** the upper longitudinal edge (12'a) of each assembly portion (122) carrying said at least one protective tab (16) extends parallel to the lower longitudinal edge (12b), forming an extension of the junction line (18) of said at least one protective tab (16).

8. The anchoring structure (10') according to claim 7, **characterised in that** the upper longitudinal edge (12'a) of adjacent strip portions (123) to an assembly portion (122) carrying said at least one protective tab (16) extends parallel to the lower longitudinal edge (12b), forming an extension of the junction line (18) in the immediate vicinity of said assembly portion (122).

9. The anchoring structure (10) according to any one of claims 1 to 8, **characterised in that** each protective tab (16, 16", 16a, 16b) extends to the juxtaposed assembly portion (121) and beyond the latter and **in that** this juxtaposed assembly portion (121) has a recess (20, 20, 20a, 20b, 20") for the passage of each protective tab.

10. The anchoring structure (10) according to claim 9, **characterised in that** the recess is located at a distance from the lower longitudinal edge and extends to the upper longitudinal edge or to a predetermined distance from said upper longitudinal edge.

11. The anchoring structure (10) according to any one of claims 9 or 10, **characterised in that** one end (16"a) of each protective tab (16") opposite its junction line (18) is folded towards a face (121a) of the juxtaposed assembly portion (121) opposite the face (121b) located opposite the assembly portion (122) integral with the protective tab (16"a).

12. The anchoring structure (10) according to any one of claims 1 to 11, **characterised in that** the protective tabs (16") constitute the attachment means of the assembly portions.

13. The anchoring structure (10) according to any one of claims 1 to 12, **characterised in that** the assembly portions have attachment means separate from the protective tabs, the latter being located between the attachment means and the upper longitudinal edge of an assembly portion.

14. The anchoring structure (10) according to any one of claims 1 to 13, **characterised in that** the juxtaposed assembly portions (121, 122) are assembled by at least one weld bead (30, 32) along their edges perpendicular to the longitudinal direction of a strip.

15. An anti-erosion coating, **characterised in that** it comprises an anchoring structure (10) according to any one of claims 1 to 14, embedded in a composite material (2), for example concrete, the composite material filling each cell (14) from the lower longitudinal edge (12b) of each strip (12) at least to the upper longitudinal edge (12a).

16. An enclosure of a fluid catalytic cracking unit, **characterised in that** it comprises at least one internal or external wall (1) covered with at least one coating according to claim 15, the lower longitudinal edge (12b) of each strip (12) of the anchoring structure (10) of the coating being attached by welding to the internal or external wall (1) of the enclosure.
